# EUROPÄISCHE PATENTSCHRIFT

(11) **EP 3 136 127 B1**
(45) Veröffentlichungstag und Bekanntmachung des Hinweises auf die Patenterteilung: **11.09.2019**
(21) Anmeldenummer: 16180139.4
(22) Anmeldetag: 19.07.2016
(51) Int. Cl.: G01S 17/10, G01B 11/14, G01S 17/48, G01S 17/87, G01S 17/89, G01S 7/481, G01S 7/00

(54) **DISTANZSENSOR UND VERFAHREN MIT EINEM DISTANZSENSOR**
DISTANCE SENSOR AND METHOD WITH A DISTANCE SENSOR
CAPTEUR TELEMETRIQUE ET PROCEDE COMPRENANT UN CAPTEUR TELEMETRIQUE

(30) Priorität: 31.07.2015 DE 102015112656
(43) Veröffentlichungstag der Anmeldung: 01.03.2017
(73) Patentinhaber: SICK AG, 79183 Waldkirch (DE)
(72) Erfinder: Albert, Magnus, 79104 Freiburg (DE); Hammes, Markus, 79117 Freiburg (DE); Sigmund, Jörg, 79100 Freiburg (DE)

(56) Entgegenhaltungen:
- DE-A1- 10 324 628
- DE-A1-102008 063 081
- DE-A1-102013 020 596
- DE-U1-202013 104 860
- BESSE P-A ET AL: "Design and Characterization of a CMOS 3-D Image Sensor Based on Single Photon Avalanche Diodes", IEEE JOURNAL OF SOLID-STATE CIRCUITS, IEEE SERVICE CENTER, PISCATAWAY, NJ, USA, Bd. 40, Nr. 9, 1. September 2005 (2005-09-01), Seiten 1847-1854, XP011138480, ISSN: 0018-9200, DOI: 10.1109/JSSC.2005.848173
- PANCHERI L ET AL: "CMOS distance sensor based on single photon avalanche diode", RESEARCH IN MICROELECTRONICS AND ELECTRONICS, 2005 PHD JULY, 25, 2005, PISCATAWAY, NJ, USA,IEEE, PISCATAWAY, NJ, USA, vol. 2, 1 July 2005 (2005-07-01), pages 103-106, XP010859018, DOI: 10.1109/RME.2005.1542947 ISBN: 978-0-7803-9345-5

## Beschreibung

Die vorliegende Erfindung betrifft einen sicheren optoelektronischen Distanzsensor nach dem Oberbegriff von Anspruch 1 sowie ein Verfahren zum Überwachen eines Schutzfeldes nach dem Oberbegriff von Anspruch 14. Weiter betrifft die Erfindung ein bewegbares Maschinenteil mit einem sicheren optoelektronischen Distanzsensor nach dem Oberbegriff von Anspruch 13.

Im heutigen Produktionsumfeld ergeben sich immer häufiger Aufgaben, in denen Menschen mit Robotern Hand in Hand auf engem Raum zusammenarbeiten müssen. Ein Schutz des Menschen vor dem Roboter ist hierbei nicht durch mechanische Schutzeinrichtungen wie Zäune oder Absperrungen möglich, sondern muss in die unmittelbare Umgebung des Roboters verlagert werden.

Um diese Art der Zusammenarbeit grundsätzlich möglich zu machen, haben Roboterhersteller Roboter mit einer Kraftbegrenzung entwickelt. Die maximale Kraft, die ein Roboter ausüben kann, bevor die Bewegung automatisch gestoppt wird, kann hier so eingestellt werden, dass im Falle einer Kollision des Roboters mit einem Menschen eine Krafteinwirkung nicht zu ernsthaften Verletzungen führen kann. Die Motorsteuerung sowie die Drehgeber, welche eine Positionsbestimmung des Roboterarms vornehmen, sind Sicherheitskomponenten mit entsprechender Zertifizierung.

Zudem wird beim Design der mechanischen Roboterkomponenten bewusst auf kantenfreie, runde oder weiche Außenkonturen geachtet, damit eine mögliche Kollisionskraft möglichst großflächig verteilt wird, und keine Gefahr von Schnittwunden oder dergleichen auftreten kann.

Eine zunehmende Verbreitung sicherer Kleinroboter mit sicheren Bewegungssteuerungen und kraftbegrenzten Antrieben reduziert die Gefahrquellen auf den Werkzeugaufsatz am Ende des Roboterarms. Ein noch nicht zufriedenstellend gelöstes Problem hierbei ist die Absicherung des Werkzeuges am Roboter an sich. Das Werkzeug selbst besteht häufig aus scharfen oder spitzen Teilen, Teilen die rotieren, oder heiß sind, usw., um seine Aufgabe überhaupt ausführen zu können. Beispiele sind Bohrer, Schrauber, Fräser, Klingen, scharfkantige Greifer für filigrane Teile, Schweißzangen, Lötspitzen etc.

Am Werkzeug besteht somit eine erhöhte Verletzungsgefahr auch bei sicherer Kraftbegrenzung des Roboters, aufgrund von Eigenbewegung des Werkzeugs oder scharfkantigen Teilen. Dieser Werkzeugaufsatz hat üblicherweise geringe Abmessungen und ist gut lokalisiert. Gleichzeitig stellt die große Vielfalt an möglichen Werkzeug-Geometrien, die schnelle Bewegung in vielen Freiheitsgraden und die Forderung nach schnellen Anpass- und Wechsel-Geometrien des Werkzeugaufsatzes neue Anforderungen an eine Absicherungslösung, die bestehende Sicherheitssensoren nicht oder nur unzureichend erfüllen können.

Mit den heute vorhandenen Sicherheitssensoren, wie Laserscannern oder Lichtgittern, lässt sich der Bereich um das Werkzeug nicht zufriedenstellend absichern, da die verfügbaren Sicherheitssensoren entweder zu groß oder zu schwer sind, um sie am Roboterarm zu befestigen und hinsichtlich der Absicherungsgeometrie zu unflexibel sind.

Ein weiteres Problem ergibt sich häufig aus der radialen Absicherung von einem einzelnen Sensorursprung aus, wie es z. B. im Fall von Laserscannern und Kamerasystemen geschieht. In diesem Fall entstehen Totbereiche im Sichtschatten des Werkzeugs, die aufwändig mit weiteren Sensoren abgedeckt werden müssen.

Aktuell verfügbare Sicherheitssensoren sind vorrangig für große, freie Überwachungsbereiche mit einfacher Geometrie, beispielsweise einer Ebene, einem Quader oder einer Linie, geeignet und weder im Hinblick auf ihre Baugröße noch im Hinblick auf ihre Flexibilität die richtige Lösung für die komplexen Geometrien an einer Werkzeugspitze.

Vorhandene Absicherungskonzepte leiden zudem häufig an den großen Ansprechzeiten der Sicherheitssensoren, die aus den komplexen Auswertungen der Daten, beispielsweise einer 3D-Kamera, insbesondere einer stereoskopischen 3D-Kamera, oder einer Latenz der Daten- und Signalübertragung resultieren. Kurze Abstände zwischen Schutzfeldgrenze und Gefahrenstelle sind nur mit schnellen Reaktionszeiten von Sensoren sowie Robotern vereinbar.

Solange die bestehenden Defizite nicht beseitigt und die Gefahrenstellen nicht zufriedenstellend abgesichert werden können, ergeben sich starke Einschränkungen in den Anwendungen, bei denen Mensch und Roboter kooperierend zusammenarbeiten können.

Die EP 2 395 274 B1 offenbart beispielsweise mehrere Laufzeitsensoren, um mehrere Dimensionen für eine Betriebszone zu überwachen. Weiter sind mehrere Laufzeitsensoren an beweglichen Abschnitten der Einrichtung angebracht. Dabei sind die Sicherheitszonen abhängig von der Geschwindigkeit des beweglichen Abschnittes eingestellt.

Die DE 20 2013 104 860 U1 offenbart eine Arbeitsvorrichtung mit einem Industrieroboter, der ein Prozesswerkzeug trägt und mit einer Steuerung, wobei die Arbeitsvorrichtung für eine Mensch-Roboter-Kooperation ausgebildet ist.

Die DE 103 24 628 A1 offenbart einen Roboter mit einem Sicherheitsabstand umgebenden Überwachungsbereich.

Die Veröffentlichung "Design and Characterization of a CMOS 3-D Image Sensor Based on Single Photon Avalanche Diodes' von Niclass vom 9.09.2005 offenbart Einzelphotonenlawinendioden für 3D-Kameras.

Die DE 10 2013 020 596 A1 offenbart einen Kraftwagen mit einem Roboter und einem mit dem Roboter mitbewegbaren Ultraschallsensor.

Die DE 10 2008 063 081 A1 offenbart einen Roboter mit einer Vielzahl von Abstandserfassungseinheiten.

Eine Aufgabe der Erfindung besteht somit darin, ein Werkzeug an einem bewegbaren Maschinenteil, insbesondere ein Werkzeug an einem Roboter, insbesondere Roboterarm, flexibel, platzsparend, robust, reaktionsschnell und kostengünstig abzusichern.

Die Aufgabe wird gemäß Anspruch 1 gelöst..

Die Aufgabe wird weiter gelöst nach Anspruch 14.

Weiter wird die Erfindung gelöst nach Anspruch 13 mit einem bewegbaren Maschinenteil mit mindestens zwei erfindungsgemäßen Distanzsensoren.

Die Erfindung umfasst ein lokales Absicherungskonzept für die Kooperation zwischen Menschen und einem bewegbaren Maschinenteil, insbesondere Robotern, insbesondere sicheren Robotern und sicheren optoelektronischen Distanzsensoren.

Zur Absicherung wird ein sicherer optoelektronischer Distanzsensor bzw. ein sicherer optoelektronischer Taster verwendet. Die Begriffe optoelektronischer Distanzsensor bzw. Lichttaster werden als Synonyme verwendet.

Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt. Die Sicherheit wird beispielsweise durch einen zweikanaligen oder zweikanalig diversitären Aufbau einer Auswerteeinheit zur Fehleraufdeckung und zur Funktionsprüfung gewährleistet. Der sichere Distanzsensor gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt der sichere Distanzsensor optional über eine Sensortestung.

Gemäß der Erfindung sind eine Vielzahl von Distanzsensoren modular angeordnet. Mehrere kompakte und kostengünstige Distanzsensoren werden in einem Gesamtsystem integriert und können in beliebiger Anzahl und in beliebigen Richtungen an dem beweglichen Maschinenteil angeordnet werden.

Weiter ist eine hohe Modularität gemäß der Erfindung vorgesehen, da die Anzahl und Anordnung der Lichttaster nahezu beliebig ist. Weiter ist eine hohe Variantengenerierung möglich durch verschiedene optische Varianten für unterschiedliche Reichweiten und Sichtwinkel der Distanzsensoren. Weiter sind verschiedene Möglichkeiten zur sicherheitstechnischen Plausibilisierung der Messwerte möglich.

Der Schutzbereich ist beispielsweise an die Kontur bzw. an die räumliche Ausdehnung des Werkzeuges angepasst. Der Schutzbereich umhüllt das Werkzeug in einem bestimmten Abstand. Der Abstand ist abhängig von der Ansprechzeit des Sensors und der Zeit, um eine Bewegung des bewegbaren Maschinenteils zu stoppen.

Die Distanzsensoren bzw. das Sensorsystem bestehend aus den Distanzsensoren wird mitfahrend am bewegbaren Maschinenteil bzw. am Roboterarm in der Nähe der Gefahrenstelle angebracht, bevorzugt direkt an bzw. oberhalb einer Werkzeugaufnahme des Roboters bzw. des bewegbaren Maschinenteils. Der Schutzbereich ist hierdurch an einer festen Position relativ zur Gefahrenstelle bzw. des Werkzeuges als Gefahrenstelle. Durch die Anordnung unmittelbar an der Gefahrenstelle und die Verwendung mehrerer flexibel zueinander positionierbarer Distanzsensoren bzw. Teilmodulen lassen sich Totzonen des Überwachungsbereichs vermeiden und die Kontur des Schutzbereichs gut an die Geometrie der Gefahrenstelle anpassen.

Durch die gute Fokussierbarkeit von Licht kann eine sehr gute Ortsauflösung erreicht werden. Hierdurch können die Distanzsensoren bzw. das Sensorsystem bestehend aus den Distanzsensoren auch an Stellen mit begrenztem Platz gut eingesetzt werden und eine Abgrenzung gegenüber Umgebungseinflüssen wie Fremdlicht oder Mehrwegreflexen erreicht werden.

Die Distanzsensoren bieten die Ausgabe von Distanzmesswerten bzw. Abstandsmesswerten. Dadurch können Werkstücke vermessen bzw. ihre Lage und Orientierung erkannt werden oder auch der Vorschub eines Werkzeuges kontrolliert werden.

Der Schutzbereich bzw. das Schutzfeld kann in seiner Tiefe an die Werkzeugbewegung und Werkstückgeometrie dynamisch angepasst werden, um z. B. nahe genug an ein Werkstück heranzukommen. Beispielsweise wird bei einer Annäherung von oben an das Werkstück der Schwellwert für die Auslösung der Sicherheitsfunktion entsprechend der abnehmenden Entfernung reduziert.

Optional wird der Schutzbereich bzw. das Schutzfeld abhängig von der momentanen Roboterposition angepasst. Dabei kann ausgenutzt werden, dass der Roboter ja sicher seine eigene Position kennt. Dabei kann der Schutzbereich abhängig von der momentanen Position vergrößert, verkleinert oder lediglich in einer bestimmten Richtung vergrößert oder verkleinert werden.

Die Distanzsensoren können ebenfalls dazu verwendet werden, die Position des Roboters selbst oder einzelner Robotergelenke zu überwachen bzw. abzusichern.

Ein Einsatz dieses modularen Absicherungskonzepts ist überall sinnvoll, wo komplexe Gefahrenstellen-Geometrien mit geringen Abmessungen möglichst konturgenau abgesichert werden müssen, beispielsweise um eine Annäherung durch einen Bediener zu erlauben. Insbesondere auch bei Maschinen mit komplexen Bewegungsprofilen ist die Absicherung durch die ortsfeste Positionierung der Sensoren relativ zur Gefahrenstelle von Vorteil.

Aufgrund einer sicheren Robotersteuerung und einer ortsfesten Anbringung der Distanzsensoren relativ zur Gefahrenstelle, können die Daten der Roboterposition ohne weitere Maßnahmen als sichere Eingangsdaten für den sicheren Sensor verwendet werden - beispielsweise zur Umschaltung von Schutzbereichen bzw. Schutzfeldern oder zur Realisierung von Muting- oder Blankingfunktionen, also zur Realisierung einer Überbrückungsfunktion bzw. einer Ausblendfunktion.

Der Distanzsensor bzw. Lichttaster hat den Vorteil, dass dieser kompakt ausgestaltet ist und in einem kleinen Gehäuse untergebracht werden kann. Weiter ist der Distanzsensor eine kostengünstige Alternative zu mechanischen Schutzsystemen und Ultraschallsensoren. Der Distanzsensor bietet in einer Anwendung bzw. Applikation eine hohe Flexibilität zur Absicherung verschiedener Geometrien bzw. Szenarien, beispielsweise können nichtrechteckige Schutzfelder realisiert werden. Weiter können Einzelstrahlen zur Absicherung realisiert werden. Auch Rundumabsicherungen können gemäß der Erfindung realisiert werden. Es ist eine Flexibilität in der Anzahl der verwendeten Distanzsensoren, vom Einzelsensor bis zu Systemen mit vielen Distanzsensoren mit einem zentralen Kontroller, Sicherheitskontroller oder einer Steuerung bzw. Sicherheitssteuerung.

Gemäß der Erfindung ist der Distanzsensor ein Lichtlaufzeitsensor.

Ein Lichtlaufzeitsensor basiert beispielsweise auf einem Time-of-flight-Chip nach dem PMD-Verfahren, welche Abstandsmessungen auf Basis einer Phasenlagemessung modulierten Lichts durchführen.

Ein Distanzsensor bzw. Lichttaster nach dem Lichtlaufzeitprinzip weist mindestens einen Lichtsender auf, der aufeinanderfolgende Lichtimpulse in einen Messbereich aussendet und mindestens einen Lichtempfänger, welcher die an einem Objekt im Messbereich zurückgeworfenen Lichtimpulse aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtimpulses ein für den Abstand des Objektes zum Lichttaster repräsentatives Abstandssignal ermittelt.

Gemäß der Erfindung weist ein Lichtempfänger des Distanzsensors mindestens ein Array aus Einzelphotonenlawinendioden auf.

Einzelphotonenlawinendioden werden auch synonym als 'Single Photon Avalanche Diode' kurz SPAD bezeichnet. Andere gängige Bezeichnungen sind 'Silicon Photomultiplier' (SiPM), 'Geigermode Avalanche Photon Diode' oder 'Single Photon Counting Diode'. Einzelphotonenlawinendioden sind in Standard CMOS-Technologie realisierbare photoempfindliche Detektoren, die ähnlich wie Avalanche Photodioden einfallende Photonen in Strompulse konvertieren. Im Gegensatz zu Avalanche Photodioden werden Einzelphotonenlawinendioden jedoch über einer Durchbruchsspannung betrieben. Damit löst bereits ein einzelnes einfallendes Photon einen Lawineneffekt aus, der als Strompuls detektiert werden kann. Aufgrund der hohen Sensitivität, nämlich einem Verstärkungsfaktor von 10⁶ können bereits geringste Empfangsleistungen bis zu Einzelphotonen detektiert werden.

Eine Verwendung eines Lichtlaufzeitsensors, insbesondere die Verwendung von Einzelphotonenlawinendioden in Kombination mit Pulslasern liefern Abstandsinformationen mit einer Genauigkeit von beispielsweise bis zu ca. einem Millimeter. Gleichzeitig erlaubt eine einfache Vorsatzoptik über eine Fokussierung die Realisierung von guter Ortsselektivität und Abgrenzung gegenüber Störlicht.

Zur Entfernungsmessung sind verschiedene Lichtlaufzeitverfahren mit einer entsprechenden Auswertung implementierbar.

Es kann ein Pulsverfahren vorgesehen sein. Beispielsweise sind ein oder mehrere Zeit-zu-Digital-Konverter (time-to-digital-converter) für das Pulsverfahren vorgesehen, in dem jedes Einzelphotonenereignis mit einem Zeitstempel versehen wird. Bei einem Nutzsignal treten daher mehrere Zeitstempel korreliert auf. Die Messwertgenerierung erfolgt statistisch. Hintergrundlicht erzeugt hingegen zufällig verteilte Zeitstempel.

Weiter kann ein CW-Verfahren (Continuous Wave) bzw. das synonyme Dauerstrich-Verfahren eingesetzt werden, wobei ein zeitlich durchgängig moduliertes Lichtsignal eingesetzt wird. Bei diesem Verfahren werden über ein Gating-Signal die Einzelphotonenevents in zwei Zähler verteilt und aus dem Verhältnis der Zählerstände eine Phase berechnet.

Weiter können analoge Signale des Einzelphotonendiodenarrays ausgewertet werden. Diese werden mit einem Schwellwert verglichen, werden gesampelt oder werden mit statistischen Methoden ausgewertet.

Bei der Auswertung nach dem Lichtlaufzeitverfahren kann zusätzlich zum Abstandswert auch ein Amplitudenwert generiert werden, z. B. durch ein Histogramm der Zeitstempel, durch eine Zählrate oder durch eine Spannungsamplitude bei einer analogen Auswertung. Durch den Amplitudenwert kann eine Plausibilitätsprüfung, insbesondere bei sicherheitstechnischen Anwendungen durchgeführt werden.

Die Verwendung von Einzelphotonenlawinendioden bietet folgende Vorteile: Einzelphotonenlawinendioden sind in einem Standard CMOS Prozess herstellbar. Damit ist der Lichttaster hoch integrierbar, z. B. als ASIC. Der Lichtsender, beispielsweise ein VSCEL, eine Laserdiode oder eine Leuchtdiode und die Steuer- und Auswerteeinheit bzw. eine getrennte Lichtsenderansteuerung sind ebenfalls auf dem Chip bzw. im Gehäuse integrierbar.

Der Distanzsensor bzw. Lichttaster ist kostengünstiger als bisher in der Sicherheitstechnik übliche photoempfindliche Empfänger. Durch Mehrfachanordnung von Lichttastern sind sehr kompakte Systeme möglich. Durch die Verwendung von Einzelphotonenlawinendioden ist eine hohe Empfindlichkeit bis zu einzelnen Photonen gegeben. Dadurch kann eine optionale Optik sehr kompakt ausgeführt werden.

Weiter ist eine Temperaturkompensation der Lichtlaufzeit oder eine Temperaturregelung der SPAD-Vorspannung bzw. der Einzelphotonenlawinendioden-Vorspannung im Lichttaster bzw. Distanzsensor möglich. Die Vorspannung der einzelnen Einzelphotonenlawinendioden wird vorzugsweise temperaturabhängig geregelt, um diese im Arbeitsbereich eines Geigermodes zu halten. Die Logik für die Regelung ist bevorzugt mit integriert. Weiter sind zum Betrieb der Einzelphotonenlawinendioden-Empfänger des Lichttasters nur Spannungen kleiner 70 Volt, beispielsweise 50 Volt bis 65 Volt und keine Hochspannungen notwendig. Weiter ist durch eine Auswertung von Abstand und Signalpegel eine Plausibilisierung möglich.

Der Lichtsender ist dabei in einer ersten Gehäusekammer und der Lichtempfänger in einer zweiten benachbarten Gehäusekammer angeordnet. Die Gehäusekammern sind optisch isoliert, so dass keine direkte optische Verbindung zwischen Lichtsender und Lichtempfänger vorhanden ist. Lediglich an einem Objekt reflektiertes bzw. remittiertes Licht des Lichtsenders gelangt auf den Lichtempfänger.

Damit der Lichtempfänger mit der mindestens einen Einzelphotonenlawinendiode nicht bereits durch einzelne Photonen gesättigt wird, z. B. durch Fremdlicht, werden viele Einzelphotonenlawinendioden angeordnet und zusammen ausgewertet. Prinzipiell können hier die Analogsignale der Einzelphotonenlawinendioden-Pixel bzw. Einzelphotonenlawinendioden-Elemente addiert werden. Es ist auch möglich, die Lawinen jeder Einzelphotonenlawinendiode über z. B. einen Komparator oder z. B. einen Analog-Digital-Wandler zu digitalisieren und digital auszuwerten. Jedoch können auch die Lawinen jeder Einzelphotonenlawinendiode direkt digital weiterverarbeitet werden.

Um die Möglichkeit eines größeren Winkelbereichs durch den Distanzsensor bzw. Lichttaster abzudecken und dennoch die nötige räumliche Auflösung zur Detektion z. B. einer Hand oder eines Armes zu erhalten, kann das Einzelphotonenlawinendioden-Array in sogenannte Makropixel aufgeteilt werden. Hierbei sind mehrere räumlich benachbarte Einzelphotonenlawinendioden-Zellen einer gemeinsamen Auswertung zugehörig und werten über eine entsprechende Optik das empfangene Licht aus einem bestimmten Winkelbereich aus. Die Anordnung kann dabei linear oder flächig erfolgen.

Eine Dynamik und/oder ein Fremdlichtverhalten ist über die verschiedenen Einzelphotonenlawinendioden bzw. Einzelphotonenlawinendioden-Arrays skalierbar.

In Weiterbildung ist der sichere Distanzsensor ein Distanzsensor, wobei Distanzsignale bzw. Empfangssignale in einem Histogramm aufaddiert werden und statistisch ausgewertet werden.

Beispielsweise wird anstelle einer Einzelpulsauswertung eine Vielzahl von Einzelmessungen mit jeweils einem Sendepuls durchgeführt und die jeweiligen Empfangssignale in einem Histogramm aufaddiert. Durch diese statistische Auswertung addiert sich das Nutzsignal, während zufällige Rauscheinflüsse ausgemittelt werden, so dass das Signal-Rausch-Verhältnis deutlich verbessert wird. Eine Besonderheit des Verfahrens ist, dass verschiedene Maßnahmen getroffen werden, um diese komplexere Auswertung auf besonders kostengünstiger Hardware durchführen zu können. Dazu zählt, dass anstelle eines aufwändigen schnellen A/D-Wandlers lediglich ein Null-Schwellen-Komparator eingesetzt wird, der das Einzelsignal mit nur 1-Bit-Auflösung digitalisiert, also binarisiert. Außerdem wird die effektive Abtastrate eines solchen statistischen Verfahrens durch mehrere Maßnahmen erheblich erhöht, um den Empfangszeitpunkt und damit die Lichtlaufzeit mit größerer zeitlicher Präzision zu erfassen. Die 1-Bit-Auflösung hat Vorteile etwa durch Implementierung mit einfachen Bauteilen. Beispielsweise wird jeder Entfernungsmessung eine Vielzahl von Einzelpulsen zugrunde gelegt.

In Weiterbildung der Erfindung sind Referenzziele im Gefahrenbereich angeordnet.

Die Verwendung der Distanzsensoren bzw. des Sensorsystems an einem Roboter bietet aus sicherheitstechnischer Sicht die Möglichkeit eines stimulierten Tests in Form einer Referenzfahrt bzw. Referenzmessung bei einem oder mehreren bekannten Zielen bzw. Referenzzielen durchzuführen. Hierdurch kann eine durchgängige Testung der gesamten Mess- und Auswertekette erzielt werden, wodurch das Erreichen von höheren Sicherheitsniveaus ermöglicht wird. Der Test kann zyklisch durchgeführt werden und die Testrate je nach Anforderungsrate angepasst werden.

Durch eine Einbindung in eine übergeordnete Steuerung kann der oder die Distanzsensoren beispielsweise in bekannter Lage zu einem Referenzziel bzw. Referenztarget, also beispielsweise einem Teil innerhalb des Gefahrenbereichs positioniert werden und hierdurch die tatsächlichen Messwerte bzw. Distanzwerte des Distanzsensors mit einer Erwartungshaltung abgeglichen werden.

Eine solche Referenzfahrt lässt sich z. B. mit der Werkzeugaufnahme oder mit Transferfahrten kombinieren und hierdurch zeitsparend in den Produktionsablauf integrieren. Die Referenzziele können beispielsweise am Roboter selbst, auf der Arbeitsfläche oder auf anderen Konturen in der Umgebung angebracht werden.

Je nach Anwendung ermöglicht die Integration des Distanzsensors in eine übergeordnete Steuerung die Messung auf eine Arbeitsfläche, da die jeweiligen Abstände aus einer Steuerung des Roboters bekannt sind und mit den tatsächlichen Messwerten abgeglichen werden können. Hierdurch kann eine ständige Referenzierung ermöglicht werden, was einem Ruhestromprinzip entspricht und das Erreichen höherer Sicherheitsniveaus ermöglicht. Weiter lässt sich eine Ansprechzeit gegenüber einem freitastenden, nicht referenzierten Messsystem deutlich verkürzen.

In Weiterbildung ist das Werkzeug wechselbar ausgebildet und die sicheren Distanzsensoren sind an dem Werkzeug bzw. der Werkzeugaufnahme angeordnet. Das Werkzeug beinhaltet den Teil, der als Werkzeugaufnahme bezeichnet wird. Beispielsweise sind die Distanzsensoren an einem Werkzeugwechsler einer Maschine angeordnet.

Für den Anwender bzw. Kunden besteht die Möglichkeit, einen eigenen Halter für die einzelnen Distanzsensoren des Sensorsystems zu entwerfen und die Distanzsensoren darin einzulassen und zu verkabeln. Hierbei muss der Anwender lediglich auf die axiale Ausrichtung sowie den Abstand zwischen den Distanzsensoren, welcher die geometrische Auflösung vorgibt, achten. Solch eine Halterung ist als Frästeil leicht und individuell herstellbar.

Die Distanzsensoren bzw. das Sensorsystem zur Absicherung bleibt am Werkzeug bzw. dem Werkzeughalter und kann vom Roboter selbständig gemeinsam mit dem Werkzeug getauscht werden, um Arbeitsabläufe mit unterschiedlichen Werkzeugen zu erfüllen. Jedes Werkzeug hat dadurch sein eigenes auf seine speziellen Geometrien angepasstes Sicherheitssystem.

In Weiterbildung der Erfindung weist der Distanzsensor ein hochintegriertes Sensormodul auf. Beispielsweise weist das hochintegrierte Sensormodul ein Lichtsender in Form eines Lasers auf und eine integrierte Auswerteeinheit zur Signalauswertung. Dadurch ist das Sensormodul kompakt ausgebildet.

Die hochintegrierten Sensormodule können mit Standardprozessen hergestellt werden. Dadurch ist das Sensormodul kostengünstig herstellbar.

Hochintegrierte Sensormodule liefern sehr schnell aufbereitete und verdichtete Daten und erlauben dadurch eine schnelle Datenübertragung und eine schnelle Datenauswertung, beispielsweise in einer für mehrere Distanzsensoren zentralen Auswerteeinheit. Die Auswerteeinheit ist dabei nahe bei den Distanzsensoren angeordnet zur Vermeidung von Latenzzeiten durch eine Datenübertragung. Dadurch wird ein Distanzsensor bzw. ein Sensorsystem aus Distanzsensoren bereitgestellt mit einer kurzen und verbesserten Reaktionszeit. Die kurze Reaktionszeit erlaubt kurze Abstände zwischen Gefahrenstelle und äußerer Schutzfeldgrenze und eine hohe Prozessgeschwindigkeit. In Weiterbildung der Erfindung weist jeder Distanzsensor eine Vorauswerteeinheit auf. Die Vorauswerteeinheit ist vorzugsweise dazu vorgesehen, die Sensordistanzdaten in ein bestimmtes Datenformat zu konvertieren und bereitzustellen, bzw. die Distanzdaten zu filtern.

Gemäß einer bevorzugten Ausführungsform sind die Distanzsensoren über eine Busleitung miteinander verbunden, wobei auf der Busleitung sichere Daten übermittelbar sind.

Ein Sensorsystem zur Absicherung setzt sich in der Regel aus einem oder mehreren gleichartigen oder verschiedenen Distanzsensoren bzw. Lichttastern zusammen, welche über ein geeignetes Bussystem oder eine andere Datenverbindung miteinander gekoppelt sind.

Jedes Sensormodul erfasst Distanzdaten bzw. Abstandsdaten aus dem eigenen Sichtbereich und führt eine erste Datenverarbeitung und Datenverdichtung durch.

In einer weiteren bevorzugten Ausführungsform der Erfindung sind auf der Busleitung sichere Schaltsignale und/oder sichere Distanzdaten übermittelbar.

Die Auswerteeinheit erkennt Schutzfeldverletzungen und kann ein sicherheitsgerichtetes Abschaltsignal ausgeben, um eine gefahrbringende Bewegung des Werkzeuges zu stoppen oder geeignet umzuleiten. Das kann z. B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden.

Alternativ kann die Auswerteeinheit jedoch die aufbereiteten Messwerte bzw. Distanzdaten einer nachgelagerten Sicherheitssteuerung über eine geeignete Schnittstelle übergeben. Die Daten der Sensormodule können auch zur Verwendung in Automatisierungsfunktionen z. B. zur Prozesskontrolle einer übergeordneten Robotersteuerung oder speicherprogrammierbaren Steuerung, kurz SPS genannt, zur Verfügung gestellt werden.

Alternativ kann die Integration dahingehend weitergetrieben werden, dass auf dem bereits sehr stark integrierten Sensormodul auch eine sicherheitstechnische Selbsttestung und Datenverarbeitung erfolgt und lediglich ein Abschaltsignal und ggf. Messwerte ausgegeben werden. Beispielsweise ist die Auswerteeinheit zweikanalig ausgebildet.

Jedoch kann der Distanzsensor alternativ selbst sichere Ausgänge, insbesondere sichere Halbleiterausgänge aufweisen. Diese sicheren Ausgänge sind zweikanalig ausgeführt, so dass redundante Schaltinformationen vorliegen. Über die sicheren Ausgänge, z. B. OSSD-Ausgänge (Output Safety Switching Device) werden die Schaltsignale z.B. OSSD-Signale ausgegeben.

In Weiterbildung der Erfindung weisen mehrere Distanzsensoren eine gemeinsame Steuer- und Auswerteeinheit auf. Die gemeinsame Steuer- und Auswerteeinheit kann beispielsweise durch ein FPGA (Field Programable Gate Array) oder einen Prozessor gebildet sein.

Eine gemeinsame Auswerteeinheit, beispielsweise ein Mikrocontroller, ein FPGA oder ein ASIC ist ein Master dieses Sensorsystems aus Distanzsensoren.

Diese Auswerteeinheit übernimmt auch die Sicherheitsselbsttestung und kompensiert, plausibilisiert und/oder korrigiert gegebenenfalls die Messwerte der Einzelsensoren.

In Weiterbildung der Erfindung weist der Distanzsensor eine Vorsatzoptik auf. Die Vorsatzoptik erlaubt eine Realisierung von verschiedenen Schutzfeldgeometrien. Neben kollimierenden Linsen für eindimensionale Überwachungsbereiche und Zylinderlinsen für flächige Schutzbereiche lassen sich auch diffraktiv optische Elemente und Freiformoptiken für beliebige Überwachungsgeometrien einsetzen. Durch die modulare Bauform und die verteilte Anbringung lassen sich Totzonen vermeiden.

Die Vorsatzoptik, Distanzsensoroptik bzw. Empfangsoptik ist optional auf einem Chip oder in dem Chipgehäuse integriert, um eine kostengünstige und kompakte Lösung, insbesondere bei hohen Stückzahlen zu erreichen.

Auch ein optischer Bandpassfilter kann direkt auf dem Chip oder dem Lichtempfänger angeordnet, insbesondere aufgedampft werden, um Hintergrundlicht abzuschwächen.

Durch eine hohe Integration und eine geringe Größe der Empfängeroptik bzw. Distanzsensoroptik ist der Lichttaster bzw. Distanzsensor sehr kompakt.

Durch unterschiedliche Empfangsoptiken bzw. Distanzsensoroptiken können verschiedene Überwachungswinkel und verschiedene Reichweiten realisiert werden.

Durch die Verwendung verschiedener optischer Elemente zur Strahlformung kann der Lichtweg geformt und an die Geometrie der Anwendung angepasst werden. Beispielsweise können mit diffraktiv optischen Elementen und Freiformlinsen komplexe Schutzbereiche wie z. B. Punktgitter, Rahmen oder gebogene Strukturen erzeugt werden.

In Weiterbildung der Erfindung ist der Schutzbereich einzelner Distanzsensoren linienförmig oder flächig ausgebildet. In Weiterbildung der Erfindung ist der Schutzbereich mehrerer kombinierter Distanzsensoren gitterförmig, oder mehrflächig ausgebildet. In Weiterbildung der Erfindung ist der Schutzbereich einzelner oder mehrere Distanzsensoren abschnittsweise eben und/oder gewölbt ausgebildet.

Es sind auch kombinierte Schutzbereiche oder auch Schutzvolumen denkbar, welche je nach Bedarf aktiviert werden. Hierdurch können unterschiedliche Werkzeugaktionen abgesichert werden oder ein Schutzvolumen für eine schnelle Bewegung in eine Richtung vergrößert werden.

In Weiterbildung der Erfindung ist der Distanzsensor ein Triangulationssensor. Dabei kann es sich beispielsweise um Lichtschnittsensoren handeln. Dabei werden beispielsweise Linien, bzw. Linienmuser oder Punkte bzw. Punktmuster in die Gefahrenstelle projiziert und mit dem ortsauflösenden Empfänger des Triangulationssensors ausgewertet. Die Muster können dabei konstant oder aber auch zeitlich veränderlich projiziert werden.

Der Distanzsensor weist keine mechanisch beweglichen Teile wie beispielsweise Ablenkspiegel oder dergleichen auf.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: mindestens einen sicheren optoelektronischen Distanzsensor an einem bewegbaren Maschinenteil;
- Figur 2: eine Vielzahl von Distanzsensoren an einem Werkzeug;
- Figur 3: mindestens einen sicheren optoelektronischen Distanzsensor an einem Roboterarm;
- Figur 4: einen Distanzsensor;
- Figur 5: mehrere Distanzsensoren an einer Busleitung;
- Figur 6: einen Lichtempfänger des Distanzsensors mit mindestens einem Array aus Einzelphotonenlawinendioden;
- Figur 7: einen ovalförmigen Schutzbereich;
- Figur 8: einen kreisförmigen Schutzbereich;
- Figur 9: einen kreisförmigen Schutzbereich;
- Figur 10: einen mehrflächigen Schutzbereich;
- Figur 11 bis 13: einen mehrflächigen Schutzbereich, wobei unterschiedliche Bereiche aktiviert sind;
- Figur 14: mindestens einen sicheren optoelektronischen Distanzsensor an einem Roboterarm.

In den nachfolgenden Figuren sind identische Teile mit identischen Bezugszeichen versehen.

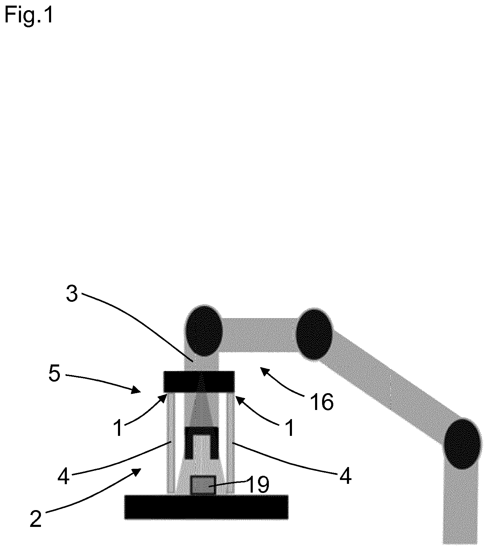

Figur 1 zeigt einen sicheren optoelektronischen Distanzsensor 1 zur Überwachung eines Gefahrenbereichs 2 an einem bewegbaren Maschinenteil 3 mit einem Schutzbereich 4, wobei der sichere Distanzsensor 1 an dem bewegbaren Maschinenteil 3 angeordnet ist, wobei an dem bewegbaren Maschinenteil 3 ein Werkzeug 5 angeordnet ist, wobei eine Vielzahl von Distanzsensoren 1 modular angeordnet sind und der Schutzbereich 4 an das Werkzeug 5 angepasst ist.

Mehrere kompakte und kostengünstige Distanzsensoren 1 werden in einem Gesamtsystem integriert und können in beliebiger Anzahl und in beliebigen Richtungen an dem beweglichen Maschinenteil 3 angeordnet werden.

Der Schutzbereich 4 ist beispielsweise an die Kontur bzw. an die räumliche Ausdehnung des Werkzeuges 5 angepasst. Der Schutzbereich 4 umhüllt das Werkzeug 5 in einem bestimmten Abstand. Der Abstand ist abhängig von der Ansprechzeit des Distanzsensors 1 und der Zeit, um eine Bewegung des bewegbaren Maschinenteils 3 zu stoppen.

Die Distanzsensoren 1 bzw. das Sensorsystem bestehend aus den Distanzsensoren 1 wird mitfahrend am bewegbaren Maschinenteil 3 bzw. am Roboterarm 16 in der Nähe der Gefahrenstelle angebracht, bevorzugt direkt an bzw. oberhalb einer Werkzeugaufnahme des Roboters bzw. des bewegbaren Maschinenteils 3. Der Schutzbereich 4 ist hierdurch an einer festen Position relativ zur Gefahrenstelle bzw. des Werkzeuges 5 als Gefahrenstelle.

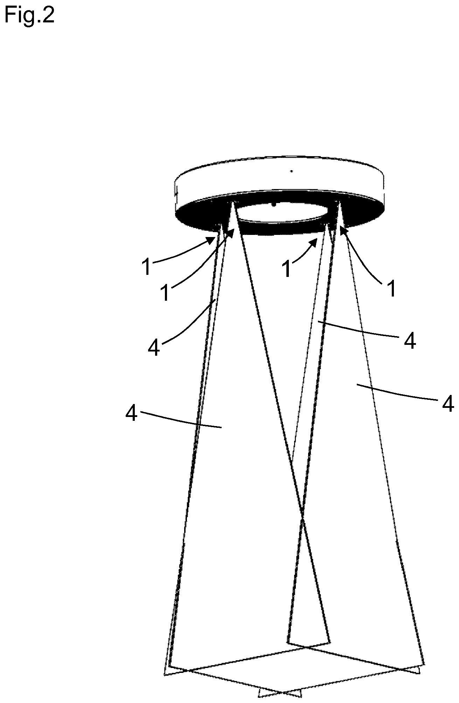

Gemäß Figur 2 sind eine Vielzahl, insbesondere vier Distanzsensoren 1 modular angeordnet. Die Distanzsensoren 1 weisen jeweils einen flächigen Schutzbereich 4 auf. Die Flächen der einzelnen Schutzbereiche 4 sind dabei senkrecht zueinander angeordnet, so dass ein Werkzeug von den Schutzbereichen 4 umhüllt wird.

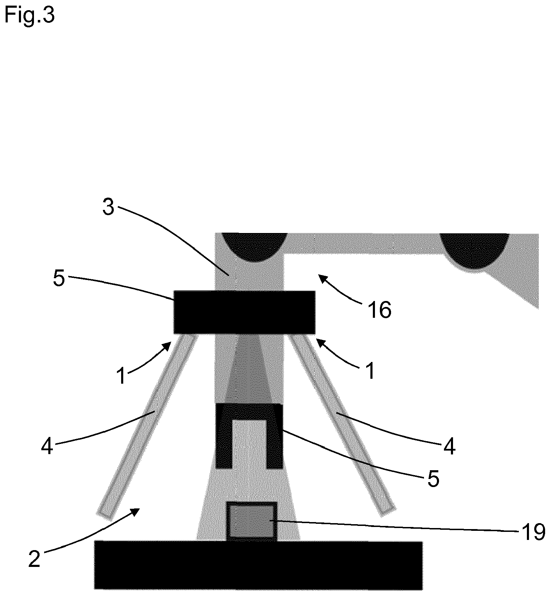

Figur 3 zeigt Schutzbereiche 4, die nach außen geneigt sind, um ein Eindringen in den Gefahrenbereich 2 früher zu erkennen.

Durch eine Einbindung in eine übergeordnete Steuerung kann der oder die Distanzsensoren 1 beispielsweise in bekannter Lage zu einem Referenzziel bzw. Referenztarget, also beispielsweise einem Teil innerhalb des Gefahrenbereichs 2 positioniert werden und hierdurch die tatsächlichen Messwerte bzw. Distanzwerte des Distanzsensors 1 mit einer Erwartungshaltung abgeglichen werden.

Die Referenzziele können beispielsweise am Roboter selbst, auf der Arbeitsfläche oder auf anderen Konturen in der Umgebung angebracht werden.

Die Distanzsensoren 1 bieten die Ausgabe von Distanzmesswerten bzw. Abstandsmesswerten.

Gemäß Figur 3 und Figur 1 kann der Schutzbereich 4 in seiner Tiefe an die Werkzeugbewegung und Werkstückgeometrie dynamisch angepasst werden, um z. B. nahe genug an ein Werkstück 19 heranzukommen.

Gemäß Figur 3 und Figur 2 ist das Werkzeug 5 wechselbar ausgebildet und die sicheren Distanzsensoren 1 sind an dem Werkzeug 5 angeordnet.

Gemäß Figur 3 ist der Schutzbereich einzelner Distanzsensoren linienförmig oder flächig ausgebildet.

Für den Anwender bzw. Kunden besteht die Möglichkeit einen eigenen Halter für die einzelnen Distanzsensoren 1 des Sensorsystems zu entwerfen und die Distanzsensoren 1 darin einzulassen und zu verkabeln. Hierbei muss der Anwender lediglich auf die axiale Ausrichtung sowie den Abstand zwischen den Distanzsensoren 1, welcher die geometrische Auflösung vorgibt, achten. Solch eine Halterung ist als Frästeil leicht und individuell herstellbar.

Die Distanzsensoren 1 bzw. das Sensorsystem zur Absicherung bleibt am Werkzeug 5 und kann vom Roboter selbständig gemeinsam mit dem Werkzeug 5 getauscht werden, um Arbeitsabläufe mit unterschiedlichen Werkzeugen 5 zu erfüllen.

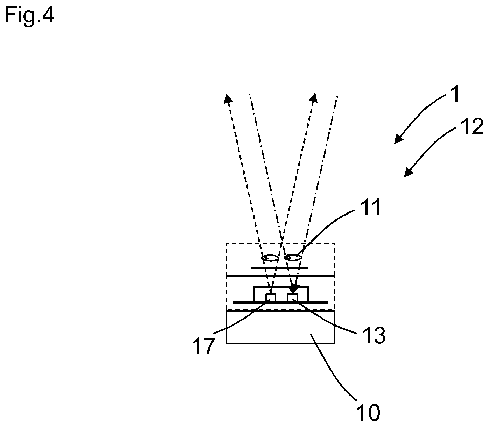

Gemäß Figur 4 ist der Distanzsensor 1 ein Lichtlaufzeitsensor 12.

Ein Distanzsensor 1 gemäß Figur 4 bzw. Lichttaster nach dem Lichtlaufzeitprinzip weist mindestens einen Lichtsender 17 auf, der aufeinanderfolgende Lichtimpulse in einen Messbereich aussendet und mindestens einen Lichtempfänger 13, welcher die an einem Objekt im Messbereich zurückgeworfenen Lichtimpulse aufnimmt und in Form von elektrischen Empfangssignalen einer Steuer- und Auswerteeinheit 10 zuführt, die unter Berücksichtigung der Lichtgeschwindigkeit aus der Zeit zwischen Aussendung und Empfang des Lichtimpulses ein für den Abstand des Objektes zum Lichttaster repräsentatives Abstandssignal ermittelt.

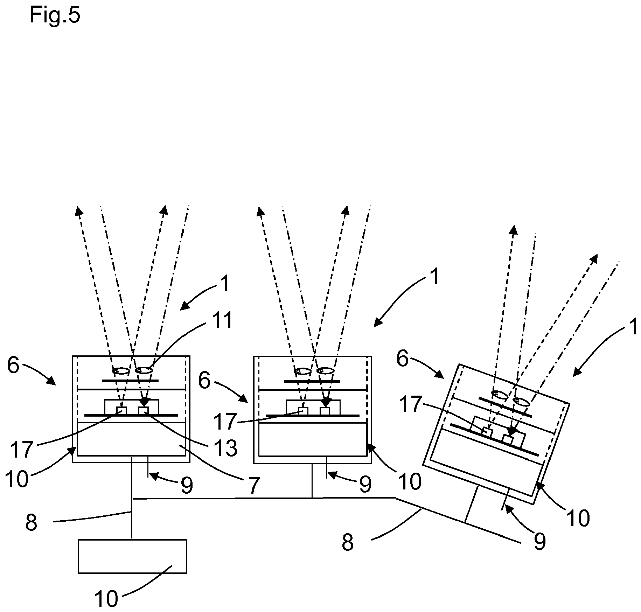

Gemäß Figur 5 weist der Distanzsensor 1 ein hochintegriertes Sensormodul 6 auf.

Beispielsweise weist das hochintegrierte Sensormodul 6 ein Lichtsender 17 in Form eines Lasers auf und eine integrierte Vorauswerteeinheit 7 bzw. Auswerteeinheit 10 zur Signalauswertung.

Die Vorauswerteeinheit 7 bzw. Auswerteeinheit 10 ist dabei nahe bei den Distanzsensoren angeordnet zur Vermeidung von Latenzzeiten durch eine Datenübertragung. Gemäß Figur 5 weist jeder Distanzsensor 1 eine Vorauswerteeinheit 7 auf. Die Vorauswerteeinheit 7 ist vorzugsweise dazu vorgesehen, die Sensordistanzdaten in ein bestimmtes Datenformat zu konvertieren und bereitzustellen, bzw. die Distanzdaten zu filtern.

Gemäß Figur 5 sind die Distanzsensoren 1 über eine Busleitung 8 miteinander verbunden, wobei auf der Busleitung 8 sichere Daten übermittelbar sind.

Ein Sensorsystem zur Absicherung setzt sich in der Regel aus einem oder mehreren gleichartigen oder verschiedenen Distanzsensoren 1 bzw. Lichttastern zusammen, welche über ein geeignetes Bussystem oder eine andere Datenverbindung miteinander gekoppelt sind.

Jedes Sensormodul bzw. jeder Distanzsensor 1 erfasst Distanzdaten bzw. Abstandsdaten aus dem eigenen Sichtbereich und führt eine erste Datenverarbeitung und Datenverdichtung durch. Auf der Busleitung 8 sind sichere Schaltsignale und/oder sichere Distanzdaten übermittelbar.

Die Steuer- und Auswerteeinheit 10 erkennt Schutzfeldverletzungen und kann ein sicherheitsgerichtetes Abschaltsignal ausgeben, um eine gefahrbringende Bewegung des Werkzeuges zu stoppen oder geeignet umzuleiten. Das kann z. B. über sichere Schaltsignale z.B. OSSD-Signale (Output Safety Switching Device-Signale) oder sichere Distanzdaten, Abstandsdaten bzw. sichere Ortsdaten des Eingriffsereignisses realisiert werden.

Alternativ kann die Steuer- und Auswerteeinheit 10 jedoch die aufbereiteten Messwerte bzw. Distanzdaten einer nachgelagerten Sicherheitssteuerung über eine geeignete Schnittstelle übergeben. Die Daten der Sensormodule können auch zur Verwendung in Automatisierungsfunktionen z. B. zur Prozesskontrolle einer übergeordneten Robotersteuerung oder speicherprogrammierbaren Steuerung, kurz SPS genannt, zur Verfügung gestellt werden.

Alternativ kann die Integration dahingehend weitergetrieben werden, dass auf dem bereits sehr stark integrierten Sensormodul auch eine sicherheitstechnische Selbsttestung und Datenverarbeitung erfolgt und lediglich ein Abschaltsignal und ggf. Messwerte ausgegeben werden. Beispielsweise ist die Steuer- und Auswerteeinheit 10 zweikanalig ausgebildet.

Jedoch kann der Distanzsensor 1 gemäß Figur 5 alternativ selbst sichere Ausgänge 9, insbesondere sichere Halbleiterausgänge aufweisen. Diese sicheren Ausgänge 9 sind z. B. zweikanalig ausgeführt, so dass redundante Schaltinformationen vorliegen. Über die sicheren Ausgänge, z. B. OSSD-Ausgänge (Output Safety Switching Device) werden die Schaltsignale z.B. OSSD-Signale ausgegeben.

Gemäß Figur 5 können mehrere Distanzsensoren 1 auch eine gemeinsame Steuer- und Auswerteeinheit 10 aufweisen. Eine gemeinsame Steuer- und Auswerteeinheit 10 ist ein Master dieses Sensorsystems aus Distanzsensoren 1.

Diese Steuer- und Auswerteeinheit 10 übernimmt auch die Sicherheitsselbsttestung und kompensiert, plausibilisiert und/oder korrigiert gegebenenfalls die Messwerte der einzelnen Distanzsensoren 1.

Gemäß Figur 4 weist der Distanzsensor 1 eine Vorsatzoptik 11 auf. Die Vorsatzoptik 11 erlaubt eine Realisierung von verschiedenen Schutzfeldgeometrien. Neben kollimierenden Linsen für eindimensionale Überwachungsbereiche und Zylinderlinsen für flächige Schutzbereiche lassen sich auch diffraktiv optische Elemente und Freiformoptiken für beliebige Überwachungsgeometrien einsetzen.

Durch unterschiedliche Vorsatzoptiken 11, bzw. Empfangsoptiken bzw. Distanzsensoroptiken können verschiedene Überwachungswinkel und verschiedene Reichweiten realisiert werden.

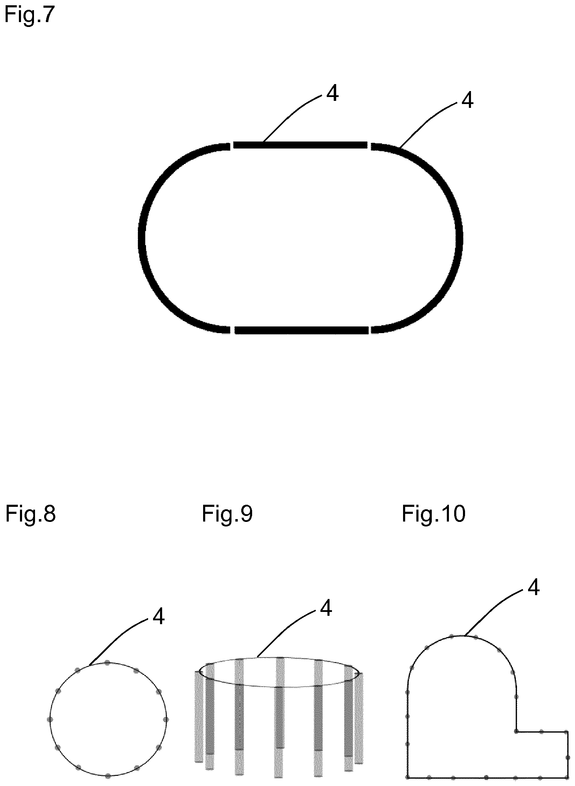

Gemäß Figur 7 ist der Schutzbereich 4 mehrflächig ausgebildet. Der Schutzbereich 4 besteht aus zwei halbzylindrischen Schutzbereichen 4, die durch jeweils zwei flächige Schutzbereiche 4 miteinander verbunden sind, so dass ein schlauchförmiger Schutzbereich 4 gebildet wird.

Gemäß Figur 8 und 9 ist der Schutzbereich 4 mehrerer kombinierter Distanzsensoren 1 gitterförmig ausgebildet, wodurch ein kreiszylinderförmiger Schutzbereich 4 gebildet wird.

Gemäß Figur 7 und 10 ist der Schutzbereich 4 einzelner oder mehrere Distanzsensoren 1 abschnittsweise eben und/oder gewölbt ausgebildet.

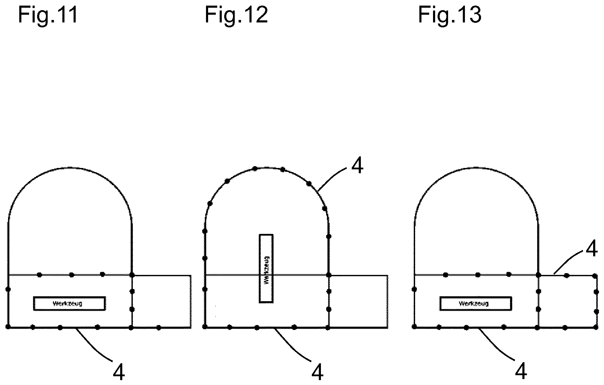

Es sind auch gemäß Figur 11 bis 13 kombinierte Schutzvolumen bzw. Schutzbereiche 4 an einem Halter denkbar, welche je nach Bedarf aktiviert werden. Hierdurch können unterschiedliche Werkzeugaktionen abgesichert werden oder ein Schutzvolumen bzw. Schutzbereich 4 für eine schnelle Bewegung in eine Richtung vergrößert werden. In Figur 11 bis 13 sind die jeweils aktiven Schutzbereiche 4 durch die einzelne aktive Lichtstrahlen dargestellt, welche als Punkte auf den Schutzbereichslinien dargestellt sind. Die Lichtstrahlen verlaufen dabei senkrecht zur Blattebene. In Figur 11 ist zunächst ein rechteckförmiger Schutzbereich 4 aktiviert. Gemäß Figur 12 wird der rechteckförmige Schutzbereich 4 aus Figur 11 um einen halbkreisförmigen Schutzbereich 4 erweitert. Gemäß Figur 13 wird der rechteckförmige Schutzbereich 4 aus Figur 11 um einen weiteren benachbarten rechteckförmigen Schutzbereich 4 erweitert.

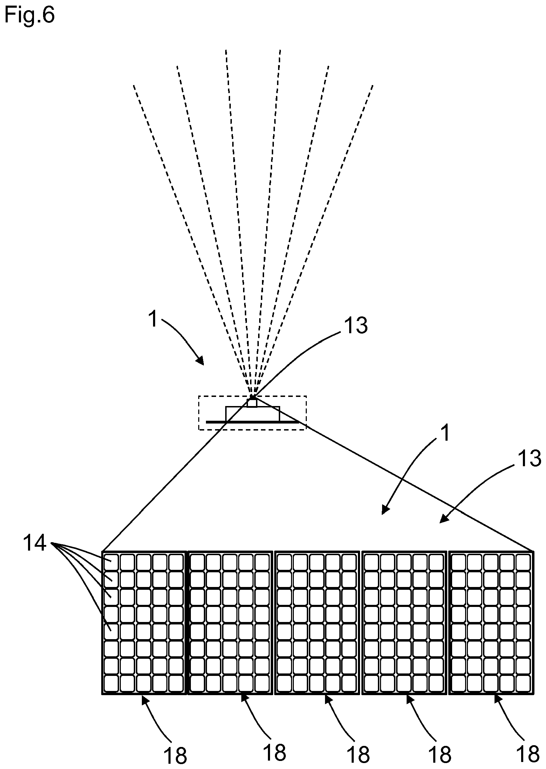

Gemäß Figur 6 weist ein Lichtempfänger 13 des Distanzsensors 1 mindestens ein Array 18 aus Einzelphotonenlawinendioden 14 auf.

Um die Möglichkeit eines größeren Winkelbereichs durch den Distanzsensor 1 bzw. Lichttaster abzudecken und dennoch die nötige räumliche Auflösung zur Detektion z. B. einer Hand oder eines Armes zu erhalten, kann das Einzelphotonenlawinendioden-Array 18 in sogenannte Makropixel aufgeteilt werden. Hierbei sind mehrere räumlich benachbarte Einzelphotonenlawinendioden-Zellen einer gemeinsamen Auswertung zugehörig und werten über eine entsprechende Optik das empfangene Licht aus einem bestimmten Winkelbereich aus. Die Anordnung kann dabei linear oder flächig erfolgen.

Gemäß einer nicht dargestellten Ausführungsform ist der Distanzsensor ein Triangulationssensor. Dabei kann es sich beispielsweise um Lichtschnittsensoren handeln. Dabei werden beispielsweise Linien, bzw. Linienmuster oder Punkte bzw. Punktmuster in die Gefahrenstelle projiziert und mit dem ortsauflösenden Empfänger des Triangulationssensors ausgewertet. Die Muster können dabei konstant oder aber auch zeitlich veränderlich projiziert werden.

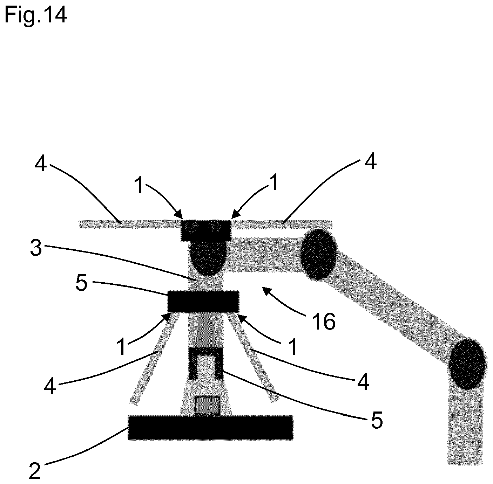

Figur 14 zeigt mindestens einen sicheren optoelektronischen Distanzsensor 1 an einem Roboterarm 16. Die Distanzsensoren 1 bzw. die Schutzbereiche 4 können auch in andere Richtungen und an anderen Positionen an der Maschine bzw. an dem Roboterarm angebracht werden.

### Bezugszeichen:

- 1: Distanzsensor
- 2: Gefahrenbereich
- 3: bewegbares Maschinenteil
- 4: Schutzbereich
- 5: Werkzeug
- 6: Sensormodul
- 7: Vorauswerteeinheit
- 8: Busleitung
- 9: sichere Ausgänge
- 10: Steuer- und Auswerteeinheit
- 11: Vorsatzoptik
- 12: Lichtlaufzeitsensor
- 13: Lichtempfänger
- 14: Einzelphotonenlawinendioden
- 16: Roboterarm
- 17: Lichtsender
- 18: Array
- 19: Werkstück

## Patentansprüche

1. Sicherer optoelektronischer Distanzsensor zur Überwachung eines Gefahrenbereichs (2) an einem bewegbaren Maschinenteil (3) mit einem Schutzbereich (4), wobei der sichere Distanzsensor (1) an dem bewegbaren Maschinenteil (3) angeordnet ist, wobei an dem bewegbaren Maschinenteil (3) ein Werkzeug (5) angeordnet ist, wobei eine Vielzahl von diesen Distanzsensoren (1) modular an dem bewegbaren Maschinenteil (3) angeordnet sind und der Schutzbereich (4) an das Werkzeug (5) angepasst ist,
wobei die Distanzsensoren (1) Lichtlaufzeitsensoren (12) sind und die Distanzsensoren jeweils mindestens einen Lichtsender (17) und mindestens einen Lichtempfänger (13) aufweisen,
**dadurch gekennzeichnet,**
**dass** der Lichtempfänger (13) jedes Distanzsensors (1) mindestens ein Array (18) aus Einzelphotonenlawinendioden (14) aufweist, wobei in jedem Distanzsensor der Lichtsender in einer ersten Gehäusekammer und der Lichtempfänger in einer zweiten benachbarten Gehäusekammer angeordnet ist, wobei die Gehäusekammern optisch isoliert sind, so dass keine direkte optische Verbindung zwischen Lichtsender und Lichtempfänger vorhanden ist,
wobei der Schutzbereich (4) einzelner Distanzsensoren (1) linienförmig oder flächig ausgebildet ist.

2. Sensor nach Anspruch 1, **dadurch gekennzeichnet, dass** Referenzziele im Gefahrenbereich angeordnet sind.

3. Sensor nach einem der vorhergehenden Ansprüche, **dadurch gekennzeichnet, dass** das Werkzeug (5) wechselbar ausgebildet ist und die sicheren Distanzsensoren (1) an dem Werkzeug (5) angeordnet sind.

4. Sensor nach einem der vorhergehenden Ansprüche, **dadurch gekennzeichnet, dass** die Distanzsensoren (1) ein hochintegriertes Sensormodul (6) aufweisen.

5. Sensor nach einem der vorhergehenden Ansprüche, **dadurch gekennzeichnet, dass** jeder Distanzsensor (1) eine Vorauswerteeinheit (7) aufweist.

6. Sensor nach einem der vorhergehenden Ansprüche, **dadurch gekennzeichnet, dass** die Distanzsensoren (1) über eine Busleitung (8) miteinander verbunden sind, wobei auf der Busleitung (8) sichere Daten übermittelbar sind.

7. Sensor nach Anspruch 6, **dadurch gekennzeichnet,**
**dass** auf der Busleitung (8) sichere Schaltsignale und/oder sichere Distanzdaten übermittelbar sind.

8. Sensor nach einem der vorhergehenden Ansprüche, **dadurch gekennzeichnet, dass** mehrere Distanzsensoren (1) eine gemeinsame Steuer- und Auswerteeinheit (10) aufweisen.

9. Sensor nach einem der vorhergehenden Ansprüche, **dadurch gekennzeichnet, dass** die Distanzsensoren (1) jeweils eine Vorsatzoptik (11) aufweisen.

10. Sensor nach einem der vorhergehenden Ansprüche, **dadurch gekennzeichnet, dass** der Schutzbereich (4) mehrerer kombinierter Distanzsensoren (1) gitterförmig, oder mehrflächig ausgebildet ist.

11. Sensor nach einem der vorhergehenden Ansprüche, **dadurch gekennzeichnet, dass** der Schutzbereich (4) einzelner oder mehrere Distanzsensoren (1) abschnittsweise eben und/oder gewölbt ausgebildet ist.

12. Sensor nach einem der vorhergehenden Ansprüche, **dadurch gekennzeichnet, dass** die Distanzsensoren (1) jeweils Triangulationssensoren sind..

13. Bewegbares Maschinenteil (3) mit mindestens zwei Distanzsensoren (1) nach einem der Ansprüche 1 bis 12.

14. Verfahren zur Überwachung eines Gefahrenbereichs (2) mittels eines Schutzbereichs (4) an einem bewegbaren Maschinenteil (3) mit mindestens einem sicheren optoelektronischen Distanzsensor (1), wobei der sichere Distanzsensor (1) an dem bewegbaren Maschinenteil (3) angeordnet wird, wobei an dem bewegbaren Maschinenteil (3) ein Werkzeug (5) angeordnet wird,
wobei eine Vielzahl von diesen Distanzsensoren (1) modular an dem bewegbaren Maschinenteil (3) angeordnet werden und
der Schutzbereich (4) an das Werkzeug (5) angepasst wird,
wobei die Distanzsensoren (1) Lichtlaufzeitsensoren (12) sind und die Distanzsensoren jeweils mindestens einen Lichtsender (17) und mindestens einen Lichtempfänger (13) aufweisen,
**dadurch gekennzeichnet,**
**dass** der Lichtempfänger (13) jedes Distanzsensors (1) mindestens ein Array (18) aus Einzelphotonenlawinendioden (14) aufweist, wobei in jedem Distanzsensor der Lichtsender in einer ersten Gehäusekammer und der Lichtempfänger in einer zweiten benachbarten Gehäusekammer angeordnet ist, wobei die Gehäusekammern optisch isoliert sind, so dass keine direkte optische Verbindung zwischen Lichtsender und Lichtempfänger vorhanden ist, wobei der Schutzbereich (4) einzelner Distanzsensoren (1) linienförmig oder flächig ausgebildet ist.

## Claims

1. A safe optoelectronic distance sensor for monitoring a hazardous zone (2) at a movable machine part (3) having a protected zone (4), wherein the safe distance sensor (1) is arranged at the movable machine part (3), wherein a tool (5) is arranged at the movable machine part (3), wherein a plurality of said distance sensors (1) are arranged in a modular manner at said movable machine part (3) and the protected zone (4) is adapted to the tool (5),
wherein the distance sensors (1) are time of flight sensors (12) and the distance sensors each have at least one light transmitter (17) and at least one light receiver (13),
**characterized in that**
the light receiver (13) of each distance sensor (1) has at least one array (18) of single photon avalanche diodes (14), with the light transmitter being arranged in a first housing chamber and the light receiver being arranged in a second adjacent housing chamber in each distance sensor, with the housing chambers being optically isolated so that no direct optical connection is present between the light transmitter and the light receiver, and
with the protected zone (4) of individual distance sensors (1) being linear or areal.

2. A sensor in accordance with claim 1, **characterized in that** reference targets are arranged in the hazardous zone.

3. A sensor in accordance with one of the preceding claims, **characterized in that** the tool (5) is changeable and the safe distance sensors (1) are arranged at the tool (5).

4. A sensor in accordance with any one of the preceding claims, **characterized in that** the distance sensors (1) have a highly integrated sensor module (6).

5. A sensor in accordance with any one of the preceding claims, **characterized in that** each distance sensor (1) has a pre-evaluation unit (7).

6. A sensor in accordance with any one of the preceding claims, **characterized in that** the distance sensors (1) are connected to one another via a bus line (8), with safe data being able to be transmitted on the bus line (8).

7. A sensor in accordance claim 6, **characterized in that** safe switching signals and/or safe distance data can be transmitted on the bus line (8).

8. A sensor in accordance with any one of the preceding claims, **characterized in that** a plurality of distance sensors (1) have a common control and evaluation unit (10).

9. A sensor in accordance with any one of the preceding claims, **characterized in that** the distance sensors (1) each have an optical head (11).

10. A sensor in accordance with any one of the preceding claims, **characterized in that** the protected zone (4) of a plurality of combined distance sensors (1) is of grid shape or has multiple areas.

11. A sensor in accordance with any one of the preceding claims, **characterized in that** the protected zone (4) of individual distance sensors (1) or of a plurality of distance sensors (1) is sectionally planar and/or arched.

12. A sensor in accordance with any one of the preceding claims, **characterized in that** the distance sensors (1) are each triangulation sensors.

13. A movable machine part (3) having at least two distance sensors (1) in accordance with any one of the claims 1 to 12.

14. A method of monitoring a hazardous zone (2) by means of a protected zone (4) at a movable machine part (3) having at least one safe optoelectronic distance sensor (1), wherein the safe distance sensor (1) is arranged at the movable machine part (3), with a tool (5) being arranged at the movable machine part (3),
wherein a plurality of said distance sensors (1) are arranged at said movable machine part (3) in a modular manner; and
wherein the protected zone (4) is adapted to the tool (5),
wherein the distance sensors (1) are time of flight sensors (12) and the distance sensors each have at least one light transmitter (17) and at least one light receiver (13),
**characterized in that**
the light receiver (13) of each distance sensor (1) has at least one array (18) of single photon avalanche diodes (14), with the light transmitter being arranged in a first housing chamber and the light receiver being arranged in a second adjacent housing chamber in each distance sensor, with the housing chambers being optically isolated so that no direct optical connection is present between the light transmitter and the light receiver, and
with the protected zone (4) of individual distance sensors (1) being linear or areal.

## Revendications

1. Capteur de distance optoélectronique sécurisé pour la surveillance d'une zone dangereuse (2) au niveau d'une partie mobile de machine (3) pourvue d'une zone de protection (4), le capteur de distance sécurisé (1) étant disposé sur la partie mobile de machine (3), un outil (5) étant disposé sur la partie mobile de machine (3), une multitude de ces capteurs de distance (1) étant disposés de façon modulaire sur la partie mobile de machine (3) et la zone de protection (4) étant adaptée à l'outil (5),
dans lequel
les capteurs de distance (1) sont des capteurs de temps de parcours de lumière (12) et les capteurs de distance comportent chacun au moins un émetteur de lumière (17) et au moins un récepteur de lumière (13), **caractérisé en ce que**
le récepteur de lumière (13) de chaque capteur de distance (1) comprend au moins un réseau (18) de diodes à avalanche à photon unique (14), dans lequel
dans chaque capteur de distance, l'émetteur de lumière est disposé dans une première chambre de boîtier et le récepteur de lumière est disposé dans une seconde chambre de boîtier adjacente,
les chambres de boîtier sont isolées optiquement de sorte qu'il n'y a aucune connexion optique directe entre l'émetteur de lumière et le récepteur de lumière,
la zone de protection (4) des capteurs de distance individuels (1) est réalisée de façon linéaire ou surfacique.

2. Capteur selon la revendication 1, **caractérisé en ce que** des cibles de référence sont disposées dans la zone dangereuse.

3. Capteur selon l'une des revendications précédentes, **caractérisé en ce que** l'outil (5) est réalisé de façon interchangeable, et les capteurs de distance sécurisés (1) sont disposés sur l'outil (5).

4. Capteur selon l'une des revendications précédentes, **caractérisé en ce que** les capteurs de distance (1) comprennent un module capteur (6) hautement intégré.

5. Capteur selon l'une des revendications précédentes, **caractérisé en ce que** chaque capteur de distance (1) comprend une unité d'évaluation préliminaire (7).

6. Capteur selon l'une des revendications précédentes, **caractérisé en ce que** les capteurs de distance (1) sont connectés entre eux via une ligne de bus (8), la ligne de bus (8) permettant de transmettre des données sécurisées.

7. Capteur selon la revendication 6, **caractérisé en ce que** la ligne de bus (8) permet de transmettre des signaux de commutation sécurisés et/ou des données de distance sécurisées.

8. Capteur selon l'une des revendications précédentes, **caractérisé en ce que** plusieurs capteurs de distance (1) comprennent une unité commune de commande et d'évaluation (10).

9. Capteur selon l'une des revendications précédentes, **caractérisé en ce que** les capteurs de distance (1) comprennent chacun une optique rapportée (11).

10. Capteur selon l'une des revendications précédentes, **caractérisé en ce que** la zone de protection (4) de plusieurs capteurs de distance (1) combinés est réalisée en forme de grille ou avec plusieurs surfaces.

11. Capteur selon l'une des revendications précédentes, **caractérisé en ce que** la zone de protection (4) de capteurs de distance individuels ou de plusieurs capteurs de distance (1) est réalisée localement plane et/ou bombée.

12. Capteur selon l'une des revendications précédentes, **caractérisé en ce que** les capteurs de distance (1) sont chacun des capteurs de triangulation.

13. Partie mobile de machine (3) comportant au moins deux capteurs de distance (1) selon l'une des revendications 1 à 12.

14. Procédé de surveillance d'une zone dangereuse (2) à l'aide d'une zone de protection (4) au niveau d'une partie mobile de machine (3) comportant au moins un capteur de distance optoélectronique sécurisé (1), le capteur de distance sécurisé (1) étant disposé sur la partie mobile de machine (3), un outil (5) étant disposé sur la partie mobile de machine (3), une multitude de ces capteurs de distance (1) étant disposés de façon modulaire sur la partie mobile de machine (3) et la zone de protection (4) étant adaptée à l'outil (5), dans lequel
les capteurs de distance (1) sont des capteurs de temps de parcours de lumière (12) et les capteurs de distance comportent chacun au moins un émetteur de lumière (17) et au moins un récepteur de lumière (13), **caractérisé en ce que**
le récepteur de lumière (13) de chaque capteur de distance (1) comprend au moins un réseau (18) de diodes à avalanche à photon unique (14), dans lequel dans chaque capteur de distance, l'émetteur de lumière est disposé dans une première chambre de boîtier et le récepteur de lumière est disposé dans une seconde chambre de boîtier adjacente,
les chambres de boîtier sont isolées optiquement de sorte qu'il n'y a aucune connexion optique directe entre l'émetteur de lumière et le récepteur de lumière, et la zone de protection (4) de capteurs de distance individuels (1) est réalisée de façon linéaire ou surfacique.
